# EUROPÄISCHE PATENTSCHRIFT

(11) **EP 2 338 766 B1**
(45) Veröffentlichungstag und Bekanntmachung des Hinweises auf die Patenterteilung: **28.11.2012**
(21) Anmeldenummer: 10015457.4
(22) Anmeldetag: 09.12.2010
(51) Int. Cl.: B62D 25/10, E05B 65/19, B60J 5/10

(54) **Lagerung für eine Abdeckung eines Fahrzeugs**
Support for a cover of a vehicle
Support pour un couvercle de véhicule

(30) Priorität: 19.12.2009 DE 102009059651
(43) Veröffentlichungstag der Anmeldung: 29.06.2011
(73) Patentinhaber: Magna Car Top Systems GmbH, 74321 Bietigheim-Bissingen (DE)
(72) Erfinder: Just, Jan, Bloomfield Hills MI 48301 (US); Rösler, Matthias, Dipl.- Ing., 70180 Stuttgart (DE)
(74) Vertreter: Völger, Silke Beatrix

(56) Entgegenhaltungen:
- DE-A1- 19 912 893
- DE-A1-102008 024 980
- GB-A- 2 069 037

## Beschreibung

Die vorliegende Erfindung betrifft eine Lagerung für eine Abdeckung eines Fahrzeugs, insbesondere eines Kraftfahrzeugs, mit den Merkmalen des Oberbegriffs des Anspruchs 1.

Zum Bewegen von Abdeckungen eines Fahrzeugs werden die Abdeckungen in der Regel um eine Schwenkachse einer Lagerung von einer geschlossenen Stellung in eine geöffnete Stellung und vice versa geschwenkt. Hierzu befinden sich die Lagerungen unterhalb der Abdeckung oder in der Trennfuge der Abdeckung zur Karosserie des Fahrzeugs, wobei die Lagerung an der Abdeckung, am Fahrzeugaufbau oder an anderen Bauteilen des Fahrzeugs angebracht sein kann. Das Schwenken der Abdeckung erfolgt mittels eines Antriebs der über ein Hebelgetriebe mit einer Kopplung zur Abdeckung verbunden ist, oder durch eine direkte Kopplung des Antriebs mit der Schwenkachse des Lagers erfolgt. Die Schwenkbewegung der Abdeckung kann hierbei auf einer Kreisbahn oder einer räumlichen Kurvenbahn erfolgen.

Da zum Bewegen der Abdeckungen aus ihren Endpositionen erhebliche Antriebskräfte notwendig sein können, werden häufig hydraulische Antriebe verwendet. Elektrische Antriebe benötigen entsprechende Untersetzungsgetriebe, die aber erheblich längere Betätigungszeiten zur Folge haben und entsprechend der zur Betätigung notwendigen Kraft groß dimensioniert sind und viel Einbauraum benötigende Getriebe verwenden. Auch weisen derartige Getriebe ein hohes Eigengewicht auf, das bei einer direkten Montage an der Abdeckung die Betätigung der Abdeckung zusätzlich erschwert.

Die Bewegung der Abdeckung erfolgt über das zum Fahrzeugaufbau bzw. zur Karosserie verbindende Lager, das beispielsweise außer einer reinen Schwenkbewegung auch lineare Bewegungen, insbesondere in horizontaler Richtung oder in vertikaler Richtung ermöglichen kann. Diese Bewegungsabläufe können überlagert oder nacheinander erfolgen. Derartige überlagerte Bewegungen werden immer dann benötigt, wenn die Abdeckung außer einer reinen Schwenkbewegung noch zusätzliche lineare Bewegungen durchführen soll, damit beispielsweise die Abdeckung zuerst linear aus einer Verriegelungsposition ausrücken kann um anschließend in eine geöffnete Stellung verfahren zu werden. Auch kann es notwendig sein, dass während dem Schwenken eine lineare Verschiebung der Abdeckung erfolgen muss, weil beispielsweise ansonsten ein auf einer normalen Kreisbahn schwenkendes klappbares Fahrzeugverdeck mit der Abdeckung kollidieren würde. Die Verwendung solcher Lagerungen mit mehreren Bewegungsfreiheitsgraden erspart oft weitere zusätzliche Getriebe, Kurvenführungen und/oder zusätzliche Antriebe.

Derartige Lagerungen mit zusätzlichen Bewegungsfreiheitsgraden werden für bewegbare Abdeckungen, wie beispielsweise Verdeckkastendeckel, Kofferraumdeckel oder auch für bewegbare Verdecke verwendet. Selbstverständlich können diese auch in angepasster Form für weitere Abdeckungen oder Klappen an Fahrzeugen zum Einsatz kommen.

Die DE 199 12 893 A befasst sich mit einem Personenkraftwagen, der mit einem beweglichen Dach in Gestalt eines Faltverdecks ausgestattet ist. Das Faltverdeck wird in einem Aufnahmeraum abgelegt, der mittels eines Verdeckkastendeckels verschließbar ist. Der Verdeckkastendeckel ist in einem rückseitigen Bereich mittels eines Mehrgelenkscharniers am Aufbau angelenkt. Ein vorderer Bereich des Verdeckkastendeckels ist mit einem Hebel versehen, dessen freies Ende eine Rolle trägt. Diese Rolle wirkt mit einem Fanghaken zusammen, der an einem Aufbau des Personenkraftwagens befestigt ist. Das Mehrgelenkscharnier ist eine Viergelenkeinrichtung, die kinematisch so ausgelegt ist, dass der Verdeckkastendeckel beim Öffnen über eine Wand eines Kofferraumdeckels hinweg bewegt wird. An dem Mehrgelenkscharnier greift ein Arbeitszylinder an.

Aus der DE 93 11 798 U1 geht ein Personenkraftwagen mit einem Verdeckkastendeckel hervor, der sich zwischen einem Faltverdeck und einem Kofferraumdeckel erstreckt. Der Verdeckkastendeckel ist in einem hinteren Deckelabschnitt mittels Parallelogramm-Scharnieren angelenkt. Zum Öffnen des Verdeckkastendeckels wird letzterer über diese Parallelogramm-Scharniere angehoben und entgegen der Fahrtrichtung verlagert. Dabei wird ein vorderer Deckelabschnitt mittels eines Fanghakens von einem am Aufbau gehaltenen Fangbolzen getrennt.

In der DE 43 36 278 A1 wird eine Betätigungseinrichtung für ein Verdeck und einen Verdeckkastendeckel für ein Kraftfahrzeug beschrieben. Mittels eines vom fahrerseitigen Sitz aus betätigbaren und verschwenkbaren Verstellhebels, welcher auf eine Verstelleinrichtung wirkt, wird der Verdeckkastendeckel von seiner geschlossenen Stellung in eine geöffnete Stellung bewegt. Hierbei wird zuerst ein Verschlussmechanismus, der den Verdeckkastendeckel in der Schließstellung verriegelt gelöst, wobei ein Lenker mit einer Kurvenscheibe einen Verriegelungsstift freigibt. Über einen weit auskragenden Hebel, der an seinem freien Ende eine Führungsvorrichtung aufweist und mit dieser in einer Führungsschiene aufgenommen ist, wird der Verdeckkastendeckel während seiner Bewegung geführt. Die Bewegung des Verdeckkastendeckels und die Betätigung der Verriegelung erfolgt mittels einer gemeinsamen Kopplung an einem angetriebenen Mehrgelenklager.

Die vorliegende Erfindung beschäftigt sich mit dem Problem, eine Abdeckung eines Fahrzeugs, insbesondere eines Kraftfahrzeugs über eine Lagerung zu bewegen, wobei die Lagerung überlagerte Bewegungsformen ermöglicht. Die Lagerung soll hierbei besonders kompakt augesführt werden und mit wenigen Teilen einfach und kostengünstig herstellbar sein.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, dass bei Fahrzeugen mit zu öffnenden und zu schließenden Abdeckungen, die Abdeckungen über einen Betätigungsmechanismus bewegt werden. Hierbei schwenkt die Abdeckung um eine Lagerung zwischen der Abdeckung und dem Fahrzeugaufbau und wird dabei über eine mechanische Vorrichtung von einer geschlossenen Stellung in eine geöffnete Stellung bewegt. Die mechanische Vorrichtung kann dabei durch einen Seilzug gebildet werden oder über ein, aus mehreren Hebeln bestehendes, Hebelgetriebe bestehen. Derartige Hebelgetriebe sind in der Regel mittels eines Verbindungselements mit der Abdeckung verbunden und weisen den Vorteil auf, dass die Abdeckung unmittelbar durch das koppelnde Verbindungselement aufgeschwenkt, bzw. aufgedrückt werden kann und über dasselbe Verbindungselement wieder verschlossen, bzw. zugezogen wird.

Die Bewegung der Abdeckung wird hierbei über die Lagerung in Form und Geschwindigkeit gesteuert, so dass außer einer reinen Schwenkbewegung zusätzlich lineare Bewegungen in vertikaler und/oder horizontaler Richtung erfolgen können. Diese unterschiedlichen Bewegungen und Bewegungsgeschwindigkeiten können zeitgleich oder entsprechend der Anlenkungen der Hebelübersetzungen der Lagerung zeitlich versetzt erfolgen. Es kann daher zum Öffnen der Abdeckung diese, beispielsweise zuerst eine horizontale Bewegung durchführen, um dann in eine Schwenkbewegung übergeführt zu werden. Auch kann während der Schwenkbewegung zusätzlich eine lineare Bewegung erfolgen, um beispielsweise einem Fahrzeugverdeck den notwendigen Freiraum bei dessen Schwenkbewegung zu ermöglichen.

Derartige Lagerungen werden vorteilhaft als vormontierte Baugruppen zusammengebaut, um bei der weiteren Montage dann nur noch mit dem Fahrzeugaufbau und der Abdeckung verbunden zu werden. Durch die, vorzugsweise mittels Befestigungsschrauben erfolgende Verbindung, kann die Abdeckung wie auch die Lagerung in ihren Positionen verstellt werden, was eine sehr feine Positionierung der Abdeckung zum umgebenden Öffnungsbereich in. der Fahrzeugkarosserie ermöglicht. Die Lagerung ist erfindungsgemäß als Viergelenk mit einem zusätzlichen schwenkbaren Halter ausgelegt, wobei die Lenker und die Lagerungen der Lenker so gewählt sind, dass die Lenker in weiten Bewegungsbereichen ineinander greifend angeordnet sind und somit eine besonders kompakte Bauform der Lagerung ermöglicht. Durch diese ineinander greifenden Lenker kann, sowohl in geschlossener, als auch in geöffneter Position der Abdeckung, beispielsweise über miteinander korrespondierende Bohrungen der einzelnen Lenker zueinander eine Verriegelung zwischen den Lenkern ermöglicht werden. Es ist somit möglich, die Abdeckung in geschlossener und geöffneter Position sicher zu fixieren.

Die Lenkergeometrien der Lagerung bieten durch entsprechende geometrische Ausformungen die Möglichkeit, steuernde Funktionen auszuüben um somit weitere Bewegungsabläufe zu ermöglichen oder einzuschränken. Da Abdeckungen mitunter, wie bei Verdeckkastendeckeln, sehr groß und somit ein hohes Eigengewicht aufweisen können, müssen die Lagerungen entsprechende Gewichte tragen können, um bei seitlichen Belastungen diese durch die Gestaltung der Lenker, sowie deren Verbindungen abstützen können. Zur kostengünstigen Herstellung sind daher die Lenker aus entsprechenden Blechen ausgeschnitten und U-förmig gebogen, wobei die Lenker somit eine hohe Eigensteifigkeit als Bauteil erreichen. Der die Lenker mit dem Fahrzeugaufbau verbindende Lagerbock ist in gleicher Weise hergestellt, wobei bei vollständig montierter Lagerung alle weiteren Bauteile sich innerhalb des Öffnungsbereiches des Lagerbocks befinden.

Bei der Verwendung wenigstens zweier parallel angeordneter Lagerungen ist es möglich, diese zur Synchronisierung im Bereich der Lenkerlagerungen mittels beide Lagerungen verbindende Lagerstangen (Bolzen) zu verbinden. Zur Unterstützung der Öffnungs- bzw. Schließbewegung kann die Lagerung mittels eines eigenen Antriebs versehen sein, der vorteilhaft als hydraulischer Antrieb ausgeführt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine seitliche Ansicht auf die geschlossene Abdeckung mit Hebelgetriebe, Koppelstange und Lagerung in zusammengeklappter Stellung,
- Fig. 2: eine Seitenansicht auf die geöffnete Abdeckung mit Hebelgetriebe, Koppelstange und Lagerung in aufgeklappter Stellung,
- Fig. 3: eine vergrößerte Ansicht der Lagerung in zusammengeklappter Stellung,
- Fig. 4: eine Seitenansicht auf die Lagerung in leicht geöffneter Stellung,
- Fig. 5: eine Seitenansicht auf die Lagerung in vollständig geöffneter Stellung.

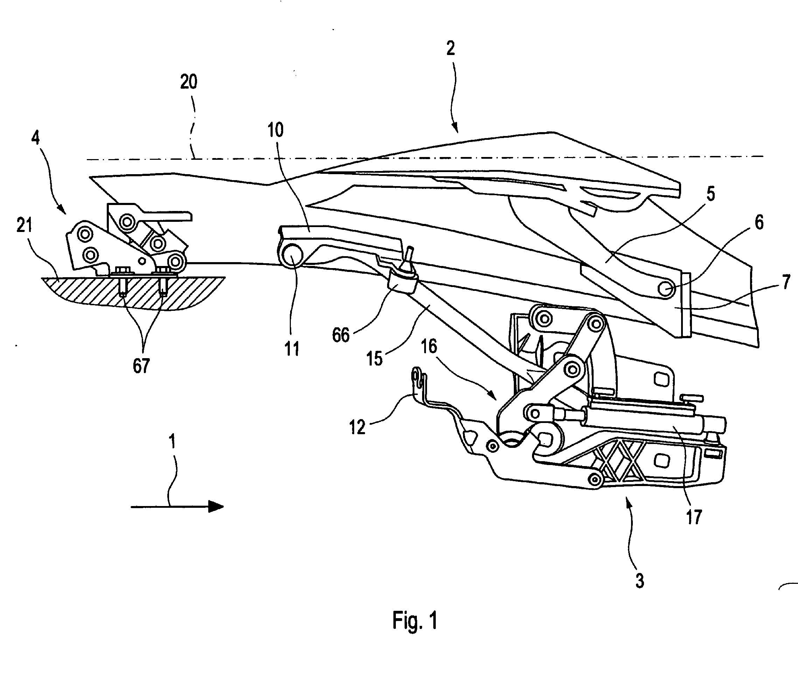

Fig. 1 zeigt eine seitliche Ansicht auf die geschlossene Abdeckung 2 mit im Hauptlager 3 montierten Hebelgetriebe 16 und Koppelstange 15. Die Abdeckung 2 ist mit ihrem der Fahrtrichtung 1 entgegen weisendem Ende über die Lagerung 4 bewegbar am Fahrzeugaufbau gelagert. In geschlossener Stellung wird die Abdeckung 2 an ihrem vorderen Ende über einen Verriegelungsbolzen 6 in einer Aufnahme 7 aufgenommen und geführt. Der Verriegelungsbolzen 6 ist hierbei am Ende eines Halters 5 befestigt, wobei der Halter 5 selber an der Unterseite der Abdeckung 2 angebracht ist. Die Aufnahme 7 ist am Fahrzeugaufbau beispielsweise mittels Schrauben befestigt und kann in der Regel über diese Schrauben in ihrer Position verstellt werden.

Kurz hinter der Mitte der Unterseite der Abdeckung 2 ist ein Halter 10 befestigt. Er bildet an seinem hinteren Ende die Schwenklagerung für die abdeckungsseitige Lagerung der Koppelstange 15. An seinem in Fahrtrichtung 1 weisenden Ende weist der Halter 10 einen seitwärts abstehenden Fortsatz auf, an dem ein aus Elastomer gefertigter Anschlagdämpfer 66 angebracht ist. Dieser Anschlagdämpfer 66 dient als oberer Anschlag für ein beispielsweise abgelegtes Verdeck und verhindert, dass das Verdeck in abgelegter Position bei Vertikalanregungen des Fahrzeugs an die Unterseite der Abdeckung 2 geraten kann. Selbstverständlich kann der Anschlagdämpfer 66 auch als Vertikalanschlag zwischen der Abdeckung 2 und dem Fahrzeug ausgelegt sein. Zur Lagefixierung und sicheren Aufnahme des Verdecks, kann dieses beispielsweise mit einem Dachlenker oder einer Dachstrebe in der Stütze 12 aufgenommen werden. Die Stütze 12 ist hierzu als zusätzliches Bauteil am Hauptlager 3 angebracht, wobei die Stütze 12 über ihre Verbindung zum Hauptlager 3 in ihrer Position mittels Befestigungsschrauben einstellbar und fixierbar ist. Es ist aber auch möglich, dass die Stütze 12 einstückig vom Hauptlager 3 ausgebildet ist.

Die Koppelstange 15 ist schwenkbar im Lager 11 an der Unterseite der Abdeckung 1 angebracht und mit ihrem anderen Ende schwenkbar mit dem Hebelgetriebe 16 verbunden. Das Hebelgetriebe 16 besteht aus mehreren Lenkern die schwenkbar miteinander verbunden sind. Über einen Antrieb 17, beispielsweise einem hydraulischen Zylinder wird das Hebelgetriebe 16 bewegt und folglich die mit dem Hebelgetriebe 16 verbundene Koppelstange 15 räumlich verlagert. Auf diese Weise wird die Abdeckung 2 von der geschlossenen Stellung in die geöffnete Stellung bewegt. Am entgegen weisenden Ende der Abdeckung 2 ist die Lagerung 4 als bewegbares Verbindungsglied zwischen der Abdeckung 2 und dem Fahrzeugaufbau 21 angeordnet. Die Lagerung 4 ist mit den Schwenkachsen ihrer bewegbaren Bauteile quer zur Fahrzeuglängsachse 20 ausgerichtet. In der Figur 1 nicht dargestellt, kann sich hinter der Lagerung 4 eine weitere, baugleiche Lagerung 4 befinden. Eine einzelne, mittig angeordnete Lagerung 4 wird vorzugsweise dann verwendet, wenn die Abdeckung 2 klein und leicht ausgeführt ist. Bei Abdeckungen 2, die beispielsweise ein abgelegtes Fahrzeugverdeck verschließen werden in der Regel zwei Lagerungen 4, in symmetrischer Anordnung zur Fahrzeuglängsachse 20 verwendet. Zur Abstützung der auf die Lagerung 4 wirkenden Gewichts- und Bewegungskräfte ist diese mittels Befestigungsschrauben 67 am Fahrzeugaufbau 21 befestigt. Mittels der Befestigungsschrauben 67 kann die gesamte Lagerung 4 in Quer- und Längsrichtung eingestellt werden, so dass die Abdeckung 2 mit ihrem Randbereich zum Randbereich der Aufnahmeöffnung für die Abdeckung 2 einen gleichmäßigen Abstand bildenden Spalt aufweist. Selbstverständlich ist es möglich, dass die Abdeckung 2 nicht in einer Aufnahmeöffnung positioniert sein muss, sondern die Aufnahmeöffnung überlappend verschließt.

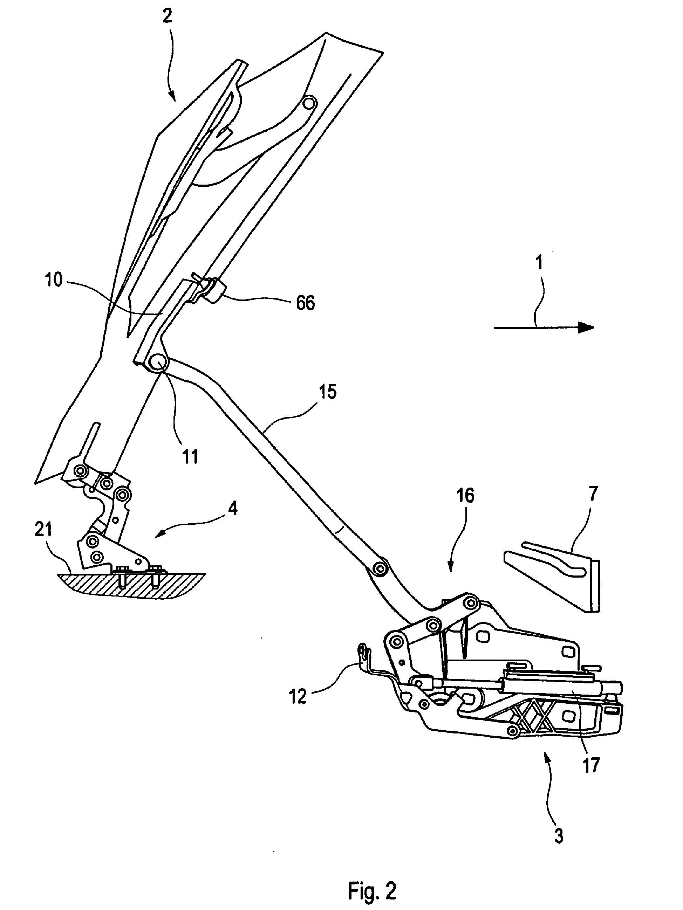

In Fig. 2 ist eine Seitenansicht auf die Abdeckung 2 in geöffneter Position dargestellt. Hierzu ist das Hebelgetriebe 16 über den Antrieb in die Stellung der geöffneten Abdeckung bewegt worden, wobei die Abdeckung 2 über die Koppelstange 15 in ihre Offenstellung bewegt wurde. Die Lagerung 4 befindet sich hierbei in geöffneter Stellung, wobei der entgegen der Fahrtrichtung 1 weisende Bereich der Abdeckung 2, außer einer Schwenkbewegung zumindest eine vertikale Bewegung erfahren hat und sich entgegen seiner geschlossenen Position in einer angehobenen Position befindet. Auf diese Weise lassen sich auch Positionen der Abdeckung 2 realisieren, die aufgrund begrenzter Baulängen der Koppelstange 15 nicht einnehmbar wären.

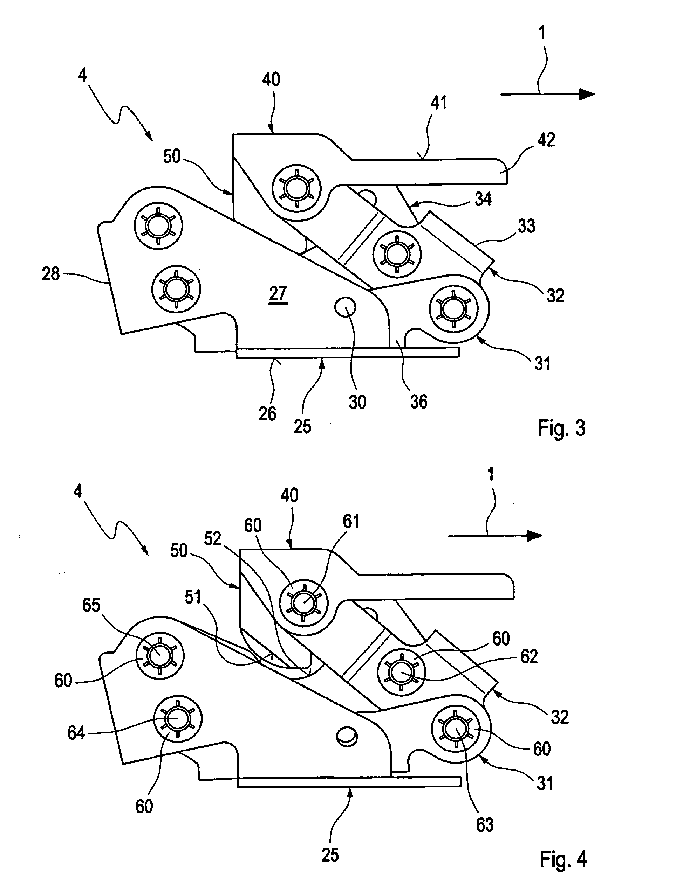

Wie in Fig.3 dargestellt zeigt die vergrößerte Ansicht der Lagerung 4 die besonders kompakte Bauweise der Lagerung 4 in zusammengeklappter Stellung. Hierbei wird die Lagerung 4 im Wesentlichen durch den Lagerbock 25 am Fahrzeugaufbau 21 abgestützt. Der Lagerbock 25 wird aus einem Blech ausgeschnitten und in eine im Wesentlichen U-förmige Form gebogen, wobei diese Form aus zwei gegenüberliegenden seitlichen Lagerflanschen 27 besteht, die mittels der einstückig verbundenen Querverbindung 28 zueinander abgestützt werden. Auf der dem Fahrzeugaufbau 21 zugewandten Seite sind die beiden seitlichen Flanschflächen 27 über die Flanschfläche 26 verbunden. Die Flanschfläche 26 kann hierbei in der Mitte des Lagerbocks 25 aus zwei symmetrischen zusammengeklappten Hälften bestehen und im Kontaktbereich miteinander verschweißt sein. Auch ist es möglich, dass die Flanschfläche 26 als eigenes Teil mit den seitlichen Flanschflächen 27 über ein geeignetes Verbindungsverfahren fest verbunden ist.

Über die Lager IV 64 in den seitlichen Lagerflanschen 27 ist der Hauptlenker 31 schwenkbar im Lagerbock 25 aufgenommen. Der Hauptlenker 31 ist ebenfalls ein U-förmig gebogenes Formblechteil, das aus zwei Seitenwänden und einer im Wesentlichen parallel zur Flanschfläche 26 des Lagerbocks 25 ausgerichteten Querverbindung 36 besteht. Das Lager IV 64 wird aus einem in beiden seitlichen Lagerflanschen 27 in Bohrungen aufgenommenen und hervorstehenden Bolzen gebildet, der an jedem seiner Enden mittels einer Sicherungsscheibe 60 in seiner Position gehalten wird. Bei geschlossener Abdeckung 2 ist der Hauptlenker 31 im Wesentlichen horizontal ausgerichtet. An dem freien Ende des Hauptlenkers 31 wird über die Lager III 63, der auch U-förmig aus einem Blech gebogene, vordere Lenker 32 gelagert. Auch hier wird in gleicher Weise die Lagerung durch einen herausragenden Bolzen mittels Sicherungsscheiben 60 gebildet. Der vordere Lenker 32 ist mit seinem vom Hauptlenker 31 weisenden Ende etwa unter 45 ° entgegen der Fahrtrichtung 1 nach hinten oben gerichtet eingebaut. Hierbei werden die Seitenwände des vorderen Lenkers 32 innerhalb des U-förmigen Hauptlenkers 31 geführt. Nahe dem Lager III 63, zwischen Hauptlenker 31 und vorderem Lenker 32, sind die Seitenwände des vorderen Lenkers 32 über eine Querverbindung 33 miteinander stabilisierend verbunden.

Am nach oben ragenden Ende des vorderen Lenkers 32 ist ein im Wesentlichen parallel zur Flanschfläche 26 ausgerichteter Halter 40 über das Lager I 61 schwenkbar mit dem vorderen Lenker 32 verbunden. Der Halter 40 ist ebenfalls im Lagerbereich U-förmig ausgebildet und in gleicher Weise wie in den Lagern IV, III 64, 63 gelagert. Das freie Ende des Halters 40 ragt als Flansch 42 in Fahrtrichtung 1, wobei die nach oben weisende Flanschfläche 41 zur Befestigung und Abstützung der Abdeckung 2 dient. An seinem lagerseitigen Ende ist mit dem Halter 40, dem vorderen Lenker 32 ein vertikal nach unten weisender Anschlag 50 eingebaut. Der Anschlag 50 ist als flaches Bauteil, vorzugsweise ein aus Blech hergestelltes Bauteil und weist an seinem unteren Ende eine gekrümmte Auflagefläche 51 auf. Zur einfacheren Gestaltung und Montage ist es vorteilhaft, den Anschlag 50 zusammen bei der Montage des Halters 40 am vorderen Lenker 32 zu montieren. Hierbei wird der Anschlag 50 über eine Aufnahmebohrung vom Bolzen des Lagers 61 gehalten. Mit seinem oberen Ende stützt sich der Anschlag 50 an der Innenseite des Stegs des U-förmigen Halters 40 ab.

Zwischen dem vorderen Halter 32 und dem hinteren Bereich des Lagerbocks 25 ist ein hinterer Lenker 34 über die Lager II, V 62, 65 als verbindendes Bauteil eingebaut. Der hintere Lenker 34 ist hierbei winkelförmig ausgelegt und mit seinem Eckbereich innerhalb des vorderen Lenkers 32 über das Lager II 62 schwenkbar gelagert. Das zum Halter 40 zeigende Ende des winkelförmigen hinteren Lenkers 34 kann bei zusammengeklappter Lagerung 4 als Anschlag und Auflage für den Flansch 42 des Halters 40 dienen. Die somit gebildete Kette zwischen den Lagern IV, III, II, V 64, 63, 62, 65 stellt ein Viergelenk-Hebelgetriebe 8 dar. Die Übersetzungsverhältnisse, die Lenkerlängen und Lageranordnungen bestimmen sowohl die Bewegungsform, die maximale Bewegung und die Geschwindigkeit der Bewegung. Selbstverständlich kann durch diese Anordnungen auch Einfluss auf die Kraftabstützung und somit auf die Belastung der Lagerungen IV, III, II, V 64, 63, 62, 65 genommen werden.

Die Fig. 4 zeigt die Lagerung 4 in leicht geöffneter (angehobener) Stellung. Hierbei ist die gekrümmte Auflagefläche 51 des Anschlags 50 gering von der Innenseite des winkelförmigen hinteren Lenkers 34 abgehoben. Die Innenseite des winkelförmigen hinteren Lenkers ist korrespondierend so zur gekrümmten Auflagefläche 51 als Aufnahmefläche 52 ausgelegt, dass bei vollständig zusammengeklappter Lagerung 4 beide gekrümmten Flächen (Auflagefläche 51 und Aufnahmefläche 52) vollständig ineinander greifen. In dieser Position verhindert das vollständige Ineinandergreifen der Auflagefläche 51 und der Aufnahmefläche 52 ein Schwenken des Halters 40 und somit auch ein Schwenken der Abdeckung 2. Es wird somit die Abdeckung 2 über den Halter 40, den Anschlag 50 und den hinteren Lenker 34 abgestützt, wobei diese Anordnung auch eine Verriegelung für die Abdeckung 2 ergibt.

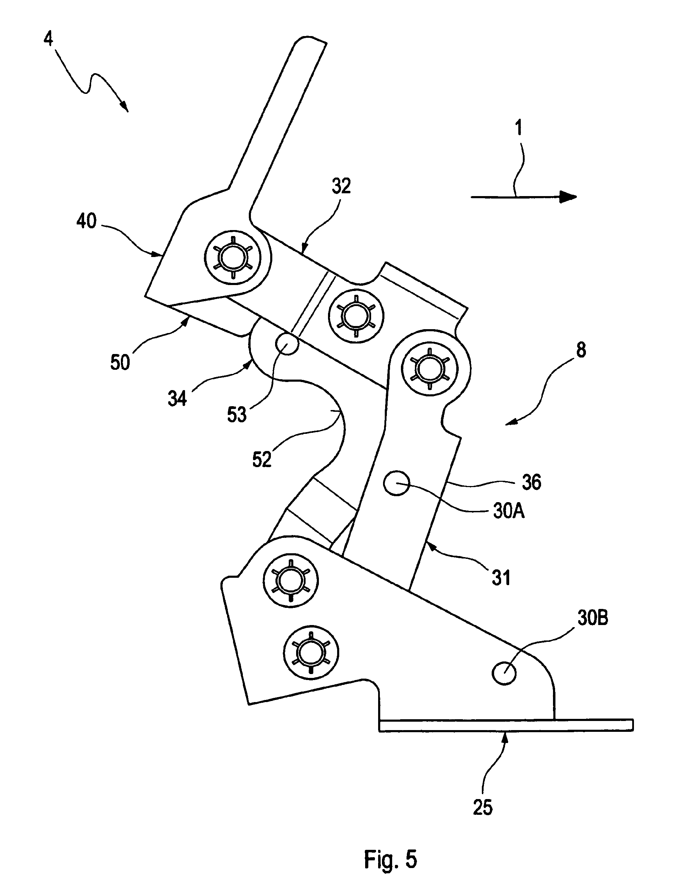

In Fig. 5 ist die Lagerung 4 in vollständig geöffneter Position dargestellt. Die Abdeckung 2, über das Hebelgetriebe 16 und die Koppelstange 15 in ihre geöffnete Stellung geschwenkt, hat den Halter 40 mit seinem Flansch 42 während des Öffnungsvorgangs um ca. 45 ° vom vorderen Lenker 32 weg in eine schräg nach oben weisende Stellung bewegt. Der Anschlag 50 kommt hierbei mit seinem unteren geraden Bereich der Auflagefläche 51 auf dem Endbereich des zum Halter 40 weisenden Teils des hinteren Lenkers 34 in eine Sperrstellung, so dass die am Flansch 42 befestigte Abdeckung nicht eigenständig nach unten schwenken kann.

Während dieser Bewegung ist das zum Halter 40 weisende und in Fahrtrichtung 1 im Wesentlichen vor dem vorderen Lenker 32 liegende Ende des winkelförmigen hinteren Lenkers 34, den vorderen Lenker 32 querend, im Wesentlichen hinter den vorderen Lenker 32 bewegt worden. Im Endbereich des zum Halter 40 weisenden Endes des winkelförmigen hinteren Lenkers 34 ist ein Anschlagstift 53 vorgesehen. Die seitlichen Wände des vorderen Lenkers 32 sind im querenden Bereich des Anschlagstifts 53 gekröpft ausgebildet, so dass der hintere Lenker 34 mit dem Anschlagstift 53 ungehindert von der vorderen in die hintere Position bewegt werden kann. Der Anschlagstift 53 erfüllt hierbei unter anderem die Funktion einer seitlichen Führung und Abstützung während des Öffnungs- oder Schließvorgangs, wobei die Enden des Anschlagstifts 53 sich bei seitlicher Belastung der Lagerung 4 an den Innenseiten der gekröpften Seitenwände des vorderen Lenkers 32 abstützen können. Anstelle des Anschlagstiftes 53 könnte auch eine Verriegelungsvorrichtung angebracht sein, die bei vollständig geöffneter Abdeckung 2 orthogonal zum hinteren Lenker 34 ausgefahren werden könnte und eine weitere Abstützung bzw. Verriegelung zur Hinterkante des vorderen Lenkers 32 ermöglichen würde. Selbstverständlich könnte diese Verriegelung auch von außerhalb der Lagerung 4 in eine anstelle des Anschlagstiftes 53 vorhandene Verriegelungsbohrung eingreifen.

### Bezugszeichenliste

- 1: Fahrtrichtung
- 2: Abdeckung
- 3: Hauptlager
- 4: Schwenklager, Lager
- 5: Halter
- 6: Verriegelungsbolzen
- 7: Aufnahme
- 8: Vierlenker-Hebelgetriebe
- 10: Halter
- 11: Lager
- 12: Stütze
- 15: Koppelstange
- 16: Hebelgetriebe
- 17: Antrieb
- 20: Fahrzeuglängsachse
- 21: Fahrzeugaufbau
- 25: Lagerbock
- 26: Flanschfläche
- 27: seitlicher Lagerflansch
- 28: Querverbindung
- 30: Einstellbohrung
- 30A: Einstellbohrung Hauptlenker
- 30B: Einstellbohrung Lagerbock
- 31: Hauptlenker
- 32: vorderer Lenker
- 33: Querverbindung
- 34: hintere Lenker
- 35: seitlicher Flansch, seitlicher Lagerflansch
- 36: Querverbindung
- 40: Halter
- 41: Flanschfläche
- 42: Flansch
- 43: seitlicher Lagerflansch
- 50: Anschlag
- 51: Auflagefläche
- 52: Abstützfläche, Aufnahmefläche
- 53: Anschlag, Anschlagstift
- 60: Sicherungsscheibe
- 61: Lager Schwenkachse
- 62: Lager II, Schwenkachse II
- 63: Lager III, Schwenkachse III
- 64: Lager III, Schwenkachse IIII
- 65: Lager V, Schwenkachse V
- 66: Anschlagdämpfer
- 67: Befestigungsschrauben

## Patentansprüche

1. Abdeckung (2) für ein Fahrzeug, insbesondere ein Kraftfahrzeug,
- wobei die Abdeckung (2) über ein Hebelgetriebe (16) und eine Koppelstange (15) zwischen einer Offenstellung und einer Geschlossenstellung bewegbar ist,
- wobei die Abdeckung eine Lagerung (4) umfasst, die im montierten Zustand der Abdeckung zwischen einem Fahrzeugaufbau (21) und einem Randbereich der Abdeckung (2) angeordnet ist,
- wobei die Lagerung (4) die Abdeckung (2) bewegbar mit dem Fahrzeugaufbau (21) verbindet,
- wobei die Lagerung (4) wenigstens zwei Lenker (31, 32, 34) aufweist,
- wobei zwei Lenker (31, 34) der Lagerung in einem Lagerbock (25) schwenkbar gelagert sind und die Lenker (31, 32, 34) und der Lagerbock (25) ein Vierlenker-Hebelgetriebe (8) bilden,
- wobei die Abdeckung (2) während dem Öffnungsvorgang oder dem Schließvorgang über die Lagerung (4) Schwenk- und/oder Linearbewegungen durchführt und die Abdeckung (2) mittels eines Halters (40) schwenkbar am oberen Ende des Vierlenker-Hebelgetriebes (8) angebracht ist,
**dadurch gekennzeichnet,**
- **dass** der Halter (40) in der Offenstellung und in der Geschlossenstellung mittels eines Anschlags (50) mit dem hinteren Lenker (34) in Wirkverbindung steht und in seiner Lage fixiert wird,
- **dass** bei Geschlossenstellung der Abdeckung (2) eine gekrümmte Auflagefläche (51) des Anschlags (50) auf einer korrespondierenden Aufnahmefläche (52) des hinteren Lenkers (34) aufliegt, sodass ein Schwenken des Halters (40) mit der Abdeckung (2) verhindert ist,
- **dass** bei Offenstellung der Abdeckung (2) ein gerader Bereich der gekrümmten Auflagefläche (51) zumindest teilweise auf dessen dem Halter (40) zugewandten Endbereich des winkelförmigen hinteren Lenkers (34) aufliegt, sodass die Abdeckung (2) nicht eigenständig nach unten schwenken kann.

2. Abdeckung (2) nach Anspruch 1,
**dadurch gekennzeichnet,**
**dass** der Anschlag (50), der Halter (40) und der vordere Lenker (32) gemeinsam mittels eines Bolzens eines Lagers (61) schwenkbar verbunden sind.

3. Abdeckung (2) nach Anspruch 1 oder 2,
**dadurch gekennzeichnet,**
**dass** der Halter (40) schwenkbar mit dem Vierlenker-Hebelgetriebe (8) verbunden ist und dass der Halter (40) in Fahrtrichtung (1) weisend als Flansch (42) ausgebildet ist, wobei an der nach oben weisenden Flanschfläche (41) des Flansches (42) die Abdeckung (2) befestigt wird.

4. Abdeckung (2) nach Anspruch 1,
**dadurch gekennzeichnet,**
**dass** die Lenker (31, 32, 34) und der Lagerbock (25) aus einem Blech ausgeschnittene im Wesentlichen U-förmige gebogene Bauteile sind.

5. Abdeckung (2) nach Anspruch 4,
**dadurch gekennzeichnet,**
**dass** die U-förmig aus Blech gebogenen Lenker (31, 32, 34) wenigstens teilweise ineinander greifend angeordnet sind und dass die Lenker (31, 32, 34) zumindest in Geschlossenstellung der Abdeckung (2) innerhalb des U-förmigen Aufnahmeraums des Lagerbocks (25) ineinander greifend positioniert sind.

6. Abdeckung (2) nach Anspruch 1,
**dadurch gekennzeichnet,**
**dass** in Geschlossenstellung der Abdeckung (2) der Lagerbock (25) und der Hauptlenker (31) miteinander fluchtende Einstellbohrungen (30) aufweisen.

7. Abdeckung (2) nach Anspruch 6,
**dadurch gekennzeichnet,**
**dass** in die Einstellbohrungen (30) des Lagerbocks (25) und des Hauptlenkers (31) ein Verriegelungsbolzen eingeführt werden kann.

## Claims

1. Cover (2) for a vehicle, in particular motor vehicle,
- wherein the cover (2) is movable between an open position and a closed position via a lever mechanism (16) and a coupling rod (15),
- wherein the cover comprises a support (4) which, in the fitted state of the cover, is arranged between a vehicle body (21) and an edge region of the cover (2),
- wherein the support (4) connects the cover (2) movably to the vehicle body (21),
- wherein the support (4) has at least two links (31, 32, 34),
- wherein two links (31, 34) of the support are mounted pivotably in a bearing bracket (25), and the links (31, 32, 34) and the bearing bracket (25) form a four-link lever mechanism (8),
- wherein the cover (2) carries out pivoting and/or linear movements via the support (4) during the opening operation or the closing operation, and the cover (2) is attached pivotably to the upper end of the four-link lever mechanism (8) by means of a holder (40),
**characterized in that**
- in the open position and in the closed position, the holder (40) is operatively connected to the rear link (34) by means of a stop (50) and is Fixed in its position,
- **in that**, in the closed position of the cover (2), a curved bearing surface (51) of the stop (50) rests on a corresponding receiving surface (52) of the rear link (34) such that pivoting of the holder (40) together with the cover (2) is prevented,
- **in that**, in the open position of the cover (2), a straight region of the curved bearing surface (51) at least partially rests on the end region, which faces the holder (40), of the angular rear link (34), and therefore the cover (2) cannot pivot downwards independently.

2. Cover (2) according to Claim 1, **characterized in that** the stop (50), the holder (40) and the front link (32) are jointly connected pivotably by means of a bolt of a bearing (61).

3. Cover (2) according to Claim 1 or 2, **characterized in that** the holder (40) is connected pivotably to the four-link lever mechanism (8), and **in that** the holder (40), pointing in the direction of travel (1), is designed as a flange (42), wherein the cover (2) is fastened to the upwardly pointing flange surface (41) of the flange (42).

4. Cover (2) according to Claim 1, **characterized in that** the links (31, 32, 34) and the bearing bracket (25) are components which are cut out from sheet metal and are bent in a substantially U-shaped manner.

5. Cover (2) according to Claim 4, **characterized in that** the links (31, 32, 34) which are bent in a U-shaped manner from sheet metal are arranged at least partially engaging one in another, and **in that**, at least in the closed position of the cover (2), the links (31, 32, 34) are positioned engaging one in another within the U-shaped receiving space of the bearing bracket (25).

6. Cover (2) according to Claim 1, **characterized in that**, in the closed position of the cover (2), the bearing bracket (25) and the main link (31) have adjusting holes (30) which are aligned with one another.

7. Cover (2) according to Claim 6, **characterized in that** a locking bolt can be inserted into the adjusting holes (30) in the bearing bracket (25) and in the main link (31).

## Revendications

1. Couvercle (2) pour un véhicule, en particulier un véhicule automobile,
- dans lequel le couvercle (2) est déplaçable entre une position ouverte et une position fermée au moyen d'un mécanisme à leviers (16) et d'une tige de couplage (15),
- dans lequel le couvercle comprend un appui (4) qui, dans l'état monté du couvercle, est disposé entre une superstructure du véhicule (21) et une région de bord du couvercle (2),
- dans lequel l'appui (4) relie le couvercle (2) de façon déplaçable à la superstructure du véhicule (21),
- dans lequel l'appui (4) comporte au moins deux bielles (31, 32, 34),
- dans lequel deux bielles (31, 34) de l'appui sont montées de façon pivotante dans un support de palier (25) et les bielles (31, 32, 34) et le support de palier (25) forment un mécanisme à leviers en quadrilatère articulé (8),
- dans lequel le couvercle (2) décrit des mouvements pivotants et/ou linéaires pendant l'opération d'ouverture ou l'opération de fermeture par l'intermédiaire de l'appui (4) et le couvercle (2) est amené au moyen d'un support (40) de façon pivotante sur l'extrémité supérieure du mécanisme à leviers en quadrilatère articulé (8),
**caractérisé en ce que**
- le support (40) se trouve en liaison active avec la bielle arrière (34) au moyen d'une butée (50) dans la position ouverte et dans la position fermée, et il est fixé en position,
- dans la position fermée du couvercle (2), une face d'appui courbe (51) de la butée (50) s'applique sur une face de réception correspondante (52) de la bielle arrière (34), de telle manière qu'un pivotement du support (40) avec le couvercle (2) soit empêché,
- dans la position ouverte du couvercle (2), une région droite de la face d'appui courbe (51) s'applique au moins en partie sur sa région d'extrémité, tournée vers le support (40), de la bielle arrière coudée (34), de telle manière que le couvercle (2) ne puisse pas pivoter vers le bas de manière autonome.

2. Couvercle (2) selon la revendication 1, **caractérisé en ce que** la butée (50), le support (40) et la bielle avant (32) sont assemblés de façon pivotante au moyen d'un boulon d'un palier (61).

3. Couvercle (2) selon la revendication 1 ou 2, **caractérisé en ce que** le support (40) est relié de façon pivotante au mécanisme à leviers en quadrilatère articulé (8) et **en ce que** le support (40) est réalisé en forme d'aile (42) orientée dans la direction de déplacement (1), dans lequel le couvercle (2) est fixé sur la face tournée vers le haut (41) de l'aile (42).

4. Couvercle (2) selon la revendication 1, **caractérisé en ce que** les bielles (31, 32, 34) et le support de palier (25) sont des pièces découpées dans une tôle et pliées essentiellement en forme de U.

5. Couvercle (2) selon la revendication 4, **caractérisé en ce que** les bielles (31, 32, 34) pliées en forme de U à partir d'une tôle sont disposées en engagement au moins partiel l'une dans l'autre et **en ce que** les bielles (31, 32, 34) sont positionnées, au moins dans la position fermée du couvercle (2), en engagement l'une dans l'autre à l'intérieur de l'espace de réception en forme de U du support de palier (25).

6. Couvercle (2) selon la revendication 1, **caractérisé en ce que**, dans la position fermée du couvercle (2), le support de palier (25) et la bielle principale (31) présentent des alésages de réglage (30) en alignement l'un avec l'autre.

7. Couvercle (2) selon la revendication 6, **caractérisé en ce qu'**un boulon de verrouillage peut être introduit dans les alésages de réglage (30) du support de palier (25) et de la bielle principale (31).
